# EUROPÄISCHE PATENTSCHRIFT

(11) **EP 0 903 268 B1**
(45) Veröffentlichungstag und Bekanntmachung des Hinweises auf die Patenterteilung: **20.03.2002**
(21) Anmeldenummer: 98115832.2
(22) Anmeldetag: 21.08.1998
(51) Int. Cl.: B60R 21/20

(54) **Kopf-Seitengassack-Rückhaltesystem für Fahrzeuginsassen**
Side airbag head restraint system for a vehicle passenger
Système de retenue de la tête par coussin gonflable latéral pour passager

(30) Priorität: 18.09.1997 DE 29716793 U
(43) Veröffentlichungstag der Anmeldung: 24.03.1999
(73) Patentinhaber: TRW Occupant Restraint Systems GmbH & Co. KG, 73551 Alfdorf (DE)
(72) Erfinder: Tietze, Hans-Joachim, 73540 Heubach (DE)
(74) Vertreter: Kitzhofer, Thomas, Dipl.-Ing.

(56) Entgegenhaltungen:
- EP-A- 0 705 738
- DE-U- 29 603 316
- GB-A- 2 261 636
- PATENT ABSTRACTS OF JAPAN vol. 095, no. 008, 29. September 1995 & JP 07 117605 A (HONDA MOTOR CO LTD), 9. Mai 1995

## Beschreibung

Die Erfindung betrifft ein Kopf-Seitengassack-Rückhaltesystem für Fahrzeuginsassen, mit einem Gassack, einem Aufnahmebehälter für den Gassack, der am Fahrzeug zu befestigen ist, wobei der Aufnahmebehälter eine Außenwand, eine dem Fahrgastraum im eingebauten Zustand zugewandte Innenwand und wenigstens eine Klappe hat, die den Behälter im nichtaktivierten Zustand des Systems verschließt und die im Rückhaltefall aufschwenkt, und wobei zwischen Außen- und Innenwand ein Schußkanal für den sich im Rückhaltefall entfaltenden Gassack gebildet ist. Insbesondere betrifft die Erfindung ein Gassack-Rückhaltesystem mit einem Kopf-Gassack, der in einem am Dachrahmen des Fahrzeugs befestigten Aufnahmebehälter untergebracht ist.

Ein gattungsgemäßes Gassack-Rückhaltesystem ist aus der DE 296 05 896 41 bekannt. Dabei ist der Gassack ein langgestreckter Kopf-Gassack, welcher sich von annähernd der A-Säule des Fahrzeugs bis annähernd zur C-Säule erstreckt. Der Aufnahmebehälter wiederum ist ein flexibler Montageschlauch, in den der gefaltete Gassack eingelegt ist. Beim Entfalten dehnt sich der in Längsrichtung geschlitzte Montageschlauch aus und gibt den Weg für den Gassack frei. Nachteilig an dieser Lösung ist, daß kein sogenannter Schußkanal vorgesehen ist, wie er bei starren Aufnahmebehältern bekannt ist. Dieser Schußkanal legt für den Beginn des Entfaltungsvorgangs die Entfaltungsrichtung fest. Die bekannten starren Behälter haben im Querschnitt entweder eine offene oder eine geschlossene U-Form. Bei der geschlossenen U-Form wird der Behälter durch eine Klappe geschlossen, die beim Entfalten des Gassacks aufgeschwenkt wird. Z.B. durch Vorsehen von Fangbändern oder Anschlägen kann der Öffnungswinkel der Klappe beschränkt sein, was es ermöglicht, daß nicht nur die Innenwand und die Außenwand den Schußkanal definieren, sondern zudem auch noch die Klappe als Verlängerung der Innen- oder der Außenwand.

In bestimmten Unfallsituationen kann es vorkommen, daß der Gassack nicht entfaltet wird, der Insasse aber gegen die Klappe oder die Innenwand des Behälters stößt. Insbesondere bei einem am Dachrahmen befestigten Behälter kann es zum Kopfkontakt mit dem Behälter kommen. Zwar sind die Behälter meist unter einer Abdeckung des Dachrahmens angeordnet, die eine dünne Schaumstoffschicht aufweist, diese Abdeckung kann jedoch nicht Kopfverletzungen vorbeugen.

Die Erfindung schafft ein Gassack-Rückhaltesystem, insbesondere ein Kopf-Gassack-Rückhaltesystem, das diesen Verletzungen des Insassen entgegenwirkt. Dies wird bei einem Gassack-Rückhaltesystem der eingangs genannten Art dadurch erreicht, daß an der Klappe Strukturen mit Ausnehmungen oder Hohlräumen angebracht, insbesondere angeformt sind, die durch Aufschlag des Kopfes plastisch deformiert werden. Die zwischen benachbarten Ausnehmungen oder Hohlräumen vorgesehene Wandung aus plastisch verformbarem Material kann bei seitlichem Auftreffen in die Ausnehmungen oder Hohlräume verschoben werden, so daß ein hohes Energieabsorptionsvermögen gegeben ist.

Beim erfindungsgemäßen Gassack-Rückhaltesystem nimmt die Klappe selbst einen Teil der Energie des Kopfes auf, so daß die Verletzungsgefahr herabgesetzt werden kann. Die bislang vorgesehene zusätzliche Polsterung im Bereich der Abdeckung des Behälters kann vollständig entfallen, so daß die besondere Ausgestaltung des Behälters nicht notwendigerweise zur Verringerung der Kopffreiheit führen muß, sondern sogar eine Vergrößerung der Kopffreiheit erreicht werden kann. Die Erfindung verringert nicht nur die Verletzungsgefahr bei nicht ausgelöstem Gassack, sondern auch bei ausgelöstem, da bei den bisherigen Systemen die aufgeschwenkte Klappe in Richtung zum Insassen weisen und der Insasse gegen diese Klappe stoßen konnte. Eine weiche Klappe hingegen verringert das Verletzungsrisiko auch in diesem Fall deutlich. Vorzugsweise sind die Rippen integraler Bestandteil der Klappe, das heißt, die gesamte Klappe samt der verrippten Struktur ist einstückig ausgebildet. Sie kann somit zum Beispiel durch Schäumen oder Spritzen hergestellt werden.

Bei der bevorzugten Ausführungsform ist vorgesehen, daß die Klappe eine verrippte Struktur hat und zwischen den Rippen die Ausnehmungen oder Hohlräume vorhanden sind. Da die Hohlräume, die im Gegensatz zu den Ausnehmungen nach außen geschlossen sind, und die Ausnehmungen jede Form haben können, sind die Rippen entsprechend auch in ihrer Geometrie beliebig. Beispielsweise können sie linear verlaufen oder gekrümmt, wenn zum Beispiel sphärische Hohlräume vorgesehen sind. Auch eine Art Wabenstruktur fällt unter den Begriff verrippte Struktur.

Wichtig zur Erzielung eines hohen Energieabsorptionsvermögens ist die Ausrichtung der Rippen relativ zur Richtung der Krafteinleitung. Die Rippen müssen nämlich vorzugsweise quer zur Richtung der Krafteinleitung, im vorliegenden Fall quer zur Kopfaufschlagrichtung verlaufen. Es sollten sich in Krafteinleitungsrichtung mehrere Hohlräume oder Ausnehmungen und Rippen aneinander anschließen, damit die Rippen in die Hohlräume oder Ausnehmungen verschoben werden können. Bei einer Ausrichtung der Rippen in Krafteinleitungsrichtung würde der Kopf des Insassen gleichzeitig auf mehrere Rippen im Bereich von deren Enden aufschlagen, so daß diese knicken müßten, um plastisch nachzugeben.

Gemäß einer anderen Ausgestaltung der Erfindung ist der Hohlraum durch Umspritzen eines in die Klappe eingelegten Hohlkörpers gebildet, was eine sehr kostengünstige Herstellungsvariante darstellt.

Gemäß der Erfindung wird durch die besondere Struktur der Klappe und deren Ausrichtung relativ zur Richtung der Krafteinleitung ein maximaler Deformationsweg ermöglicht, der fast der gesamten Breite der Klappe und damit des Abstandes zwischen Innen- und Außenwand entspricht. Dies ist insbesondere dann der Fall, wenn nicht nur die Klappe nachgiebig und energieabsorbierend ausgebildet, sondern auch der gesamte Behälter verformbar ist, indem die Innenwand bis zur Anlage an die Außenwand elastisch oder plastisch verformbar ist, wodurch noch mehr Energie absorbiert werden kann.

Da der Behälter auch gekrümmt verlaufen kann, ist es vorteilhaft, wenn mehrere nacheinander angeordnete Klappen vorgesehen sind, durch die ein leichtes Verschließen und Öffnen der Klappen sichergestellt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Querschnittsansicht durch eine erste Ausführungsform des erfindungsgemäßen Gassack-Rückhaltesystems, welches als Kopf-Gassack-Rückhaltesystem ausgebildet ist,
Fig. 2 eine Querschnittsansicht durch eine zweite Ausführungsform des erfindungsgemäßen Gassack-Rückhaltesystems, ebenfalls als Kopf-Gassack-Rückhaltesystem ausgebildet,
Fign. 3 bis 5 verschiedene Ausführungsformen der Klappe des Aufnahmebehälters gemäß Ansicht A in Fig. 1 mit geöffneten Klappen,
Fig. 6 eine Seitenansicht des geschlossenen Aufnahmebehälters für den Kopf-Gassack, wobei der Aufnahmebehälter den in Fig. 1 gezeigten Querschnitt hat, und
Fig. 7 eine Querschnittsansicht durch eine weitere Ausführungsform des erfindungsgemäßen Gassack-Rückhaltesystems, das als Kopf-Gassack-Rückhaltesystem ausgebildet ist, im eingebauten Zustand.

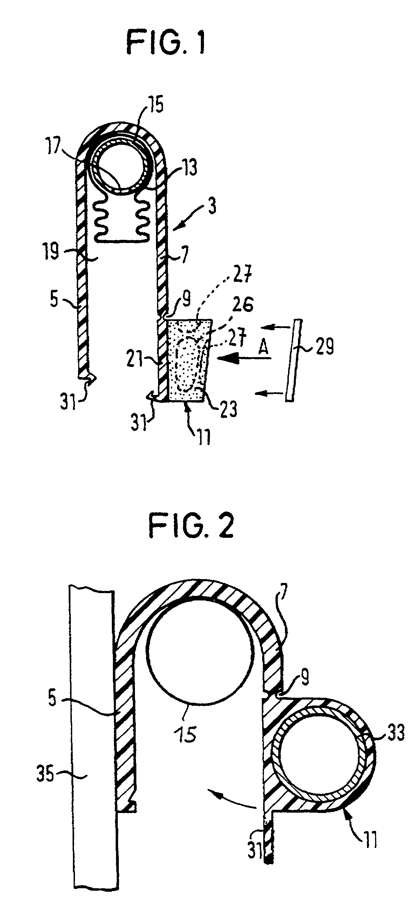

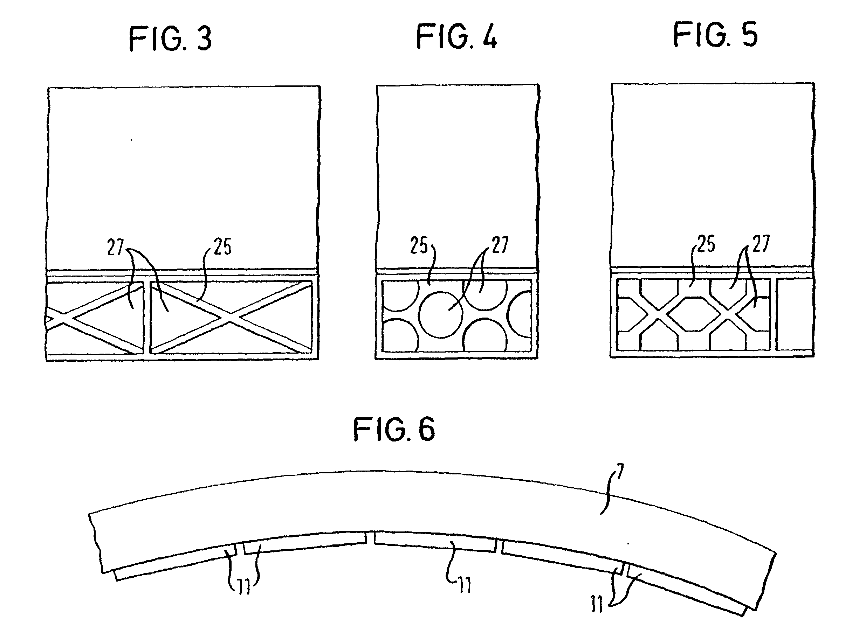

In Fig. 1 ist ein Kopf-Seitengassack-Rückhaltesystem für Fahrzeuginsassen gezeigt, das sich längs des Dachrahmens von seitlich des Heckinsassen bis seitlich des Frontinsassen erstreckt. Das Rückhaltesystem umfaßt einen im wesentlichen im Querschnitt U-förmigen Aufnahmebehälter 3 mit einer Außenwand 5, mit der der Behälter 3 am Dachrahmen befestigt ist, und einer dem Fahrgastraum in eingebautem Zustand zugewandten Innenwand 7. Die Innenwand 7 ist im Querschnitt gesehen kürzer als die Außenwand 5. Am unteren Rand der Innenwand 7 sind über Scharniere 9 zahlreiche nacheinander angeordnete Klappen 11 vorgesehen (vgl. auch Fig. 6). In Fig. 1 ist die Klappe 11 in aufgeschwenktem Zustand gezeigt, so daß der Behälter 3 geöffnet ist. Am oberen Ende des Behälters 3 ist ein gefalteter Kopf-Gassack 13 angeordnet, der als sogenannter Vorhang ausgebildet ist und im aufgeblasenen Zustand die Seitenscheiben großteils abdeckt. Im Inneren des Gassacks ist eine sogenannte Lanze 15 vorgesehen, die sich fast über die gesamte Länge des Gassacks erstreckt und die als Gasleitung dient, damit der langgestreckte Gassack nicht nur von einem Ende aus, sondern annähernd über seinen gesamten oberen Rand gleichmäßig aufgeblasen wird. Die Lanze hat hierzu zahlreiche Öffnungen 17 an ihrem unteren Rand.

Zwischen dem gefalteten Gassack 13 und dem Scharnier 9 ergibt sich ein sogenannter Schußkanal 19. Der Schußkanal 19 bestimmt zu Beginn des Aufblasvorgangs die Entfaltungsrichtung des Gassacks 13.

Die Klappe 11 ist einstückig mit der Innenwand 7 verbunden. Das Scharnier 9 ist durch Bildung eines dünnen Wandungsteils gebildet. Die Klappe 11 ist aus mehreren Komponenten zusammengesetzt, nämlich einer innenseitigen, elastisch verformbaren Grundplatte 21, aus der auch die Innen- und Außenwand 5, 7 bestehen, sowie einer weiteren Komponente, nämlich einer an der Grundplatte 21 befestigten, plastisch verformbaren Auflage 23. Die Auflage 23 hat eine energieabsorbierende, verrippte Struktur, wie es in den Figuren 3 bis 5 an verschiedenen Beispielen dargestellt ist. Die Auflage 23 weist zahlreiche Rippen 25 auf, die als Wandung zwischen eingeschlossenen Hohlräumen, von denen in Figur 1 der Hohlraum 26 angedeutet ist, und Ausnehmungen 27 dienen. Die Ausnehmungen 27 sind nach außen, genauer gesagt zu der dem Fahrgastraum zugewandten Außenseite hin offen. Die Auflage kann Kreuzverrippungen (vgl. Fig. 3), halbkugelförmige Ausnehmungen 27 (vgl. Fig. 4) haben oder eine Wabenstruktur (vgl. Fig. 5) bilden. Selbstverständlich sind auch andere Strukturen möglich. Die Rippen 25 sind aus leicht plastisch verformbarem Kunststoffmaterial. Von außen wird eine dünne Abdeckung 29 (vgl. Fig. 1) auf die Auflage 23 geklebt oder gesteckt (z.B. durch eine Clip-Verbindung), damit die Ausnehmungen 27 nach außen geschlossen sind und sich insgesamt ein geschlossener Körper zur Energieaufnahme ergibt.

Rastverbindungen 31 am unteren Rand jeder Klappe 11 und am unteren Rand der Innenwand 5 dienen dem Verschließen des Behälters 3, indem die Klappen 11 nach Einlegen der Lanze 15 mit dem Gassack 13 in Richtung zur Außenwand 5 geschwenkt werden und an dieser befestigt bleiben. Die Rastverbindungen 31 müssen selbstverständlich so ausgebildet sein, daß sie beim Öffnen der Klappen 11 durch den sich entfaltenden Gassack 13 nicht zum Zerstören des Gassacks 13 führen oder den Entfaltungsvorgang beeinflussen.

Bei der in Fig. 2 gezeigten Ausführungsform wird die energieabsorbierende Struktur der Klappe 11 dadurch erreicht, daß sie durch Umspritzen eines rohrförmigen, eingelegten Hohlkörpers 33 gebildet ist. In Fig. 2 ist auch der Dachrahmen 35 zu erkennen, an dem die Außenwand 5 befestigt ist. Im übrigen sind gleiche Teile auch mit gleichen Bezugszahlen in den verschiedenen Figuren bezeichnet.

Eine weitere Möglichkeit, die Klappe 11 als Hohlkörper auszubilden, besteht beispielsweise darin, daß sie im sogenannten Gas-Innendruck-Verfahren hergestellt wird und dadurch Hohlräume gebildet werden. In Fig. 2 ist im übrigen zur Vereinfachung der Gassack 13 nicht dargestellt.

Nach dem Einsetzen des Gassacks 13 zusammen mit der Lanze 15 und nach dem Schließen der Klappen 11 ist keine weitere Umhüllung des Aufnahmebehälters 3 vorgesehen, wie dies bei bislang üblichen Behältern der Fall ist. Diese werden nämlich üblicherweise in eine Folie eingeschweißt, damit der Behälter stets geschlossen bleibt.

Der Vorteil des erfindungsgemäßen Gassack-Rückhaltesystems besteht darin, daß sowohl im geschlossenen Zustand als auch im geöffneten Zustand des Aufnahmebehälters 3 Kopfverletzungen durch Aufprall des Kopfes am Behälter, insbesondere an der Klappe 11, reduziert werden können. Die Klappe 11 ist energieabsorbierend ausgebildet, indem sozusagen einige Schichten von Rippen 25 plastisch verformbar sind, so daß der Kopf nicht unmittelbar auf den Dachrahmen 35 prallt. Da auch die Außen- und Innenwand 5, 7 aus nachgiebigem Material, insbesondere elastischem Kunststoff sind, gibt der Behälter beim Aufprall des Kopfes so weit nach, ohne in Einzelteile zu zerbrechen, bis im Extremfall der Gassack 13 zusammengedrückt wird und die Innenwand 7 an der Außenwand 5 anliegt. Auch durch die Nachgiebigkeit des Behälters selbst kann Energie abgebaut werden.

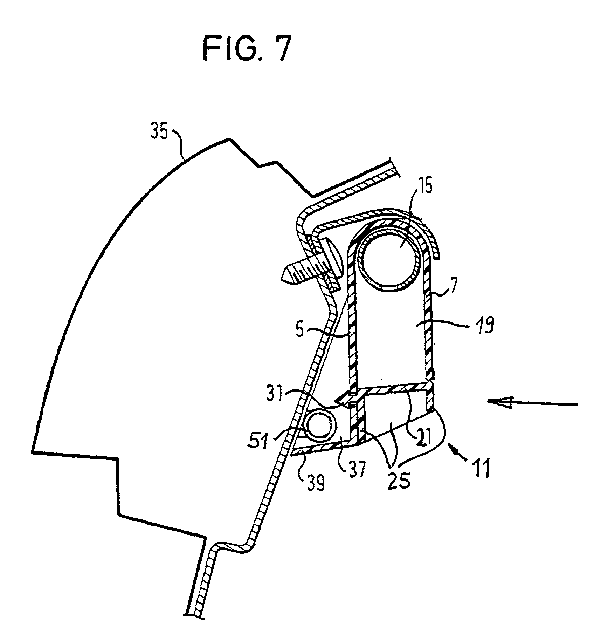

Die in Figur 7 dargestellte Ausführungsform unterscheidet sich von der in Figur 1 dargestellten insoweit, als die Auflage 23 nicht als separates, an der Grundplatte 21 angebrachtes Teil ausgebildet ist. Vielmehr ist der gesamte Behälter samt der Klappe und der verrippten Struktur einstückig ausgebildet. Damit die Klappe auch eine möglichst hohe Energieabsorptionsfähigkeit hat, ist ihre Ausrichtung samt der Ausrichtung ihrer Rippen relativ zu der durch einen Pfeil dargestellten Richtung der Krafteinleitung beim Aufschlag des Kopfes entscheidend. Die Grundplatte 21 erstreckt sich im wesentlichen parallel zur Krafteinleitungsrichtung, und die Rippen senkrecht hierzu, damit sie bei Krafteinleitung in die Ausnehmungen und Hohlräume verschoben werden können. Auch die Grundplatte 21 wird selbstverständlich bei Aufprall des Kopfes plastisch deformiert.

Bei der in Fig. 7 dargestellten Ausführungsform ist der Dachrahmen 35 detaillierter dargestellt. Damit der Schußkanal 19 zur Seitenscheibe (nicht dargestellt) exakt ausgerichtet ist, sind an der Außenwand 5 zahlreiche Stege 37 einstückig angeformt, die durch Querstege 39 miteinander verbunden sind. Bei bislang bekannten Rückhaltesystemen war in diesem Bereich stets ein Formschaumteil zwischengelegt, das nun entfallen kann. Durch die Stege 37 und die Querstege 39 ergeben sich im eingebauten Zustand abgeschlossene Hohlräume zwischen der Außenwand 5 und dem Dachrahmen 35, in denen die Spitzen der Rastverbindungen 31, die beim Öffnen der Klappe 11 abgerissen werden, liegen bleiben. Auch die Stege 37, 39 nehmen Energie beim Aufprall des Kopfes des Insassen auf.

Damit im Bereich der Stege 37 und der Querstege 39 noch mehr Energie aufgenommen werden kann, ist ein Hohlkörper in Form eines langgestreckten Rohres in entsprechende Ausnehmungen in den Stegen 37 eingesetzt, die eine Clip-Verbindung darstellen. Das Rohr wird beim Verlagern der Außenwand 5 plastisch deformiert und nimmt dadurch Energie auf. Es ist über die Clipverbindung auch auswechselbar. Das Rohr selbst ist dem Verlauf des Dachrahmens 35 folgend entsprechend gebogen. Es ist auch möglich, ein Rohr entsprechend dem Rohr 51 an der Klappe 11 vorzusehen, indem es zum Beispiel von unten in entsprechende Ausnehmungen in den Rippen eingesetzt wird.

## Patentansprüche

1. Kopf-Seitengassack-Rückhaltesystem für Fahrzeuginsassen, mit einem Gassack (13), einem Aufnahmebehälter (3) für den Gassack (13), der am Fahrzeug zu befestigen ist, wobei der Aufnahmebehälter (3) eine Außenwand (5), eine dem Fahrgastraum in eingebautem Zustand zugewandte Innenwand (7) und wenigstens eine Klappe (11) hat, die den Behälter (3) im nichtaktivierten Zustand des Systems verschließt und die im Rückhalte fall aufschwenkt, und wobei zwischen Außen- und Innenwand (5, 7) ein Schußkanal (19) für den sich im Rückhaltefall entfaltenden Gassack (13) gebildet ist, **dadurch gekennzeichnet, daß** an der Klappe (11) Strukturen mit Ausnehmungen (27) oder Hohlräumen (26) angebracht, insbesondere angeformt sind, die durch Aufschlag des Kopfes plastisch deformiert werden.

2. Gassack-Rückhaltesystem nach Anspruch 1, **dadurch gekennzeichnet, daß** die Klappe (11) eine verrippte Struktur hat und zwischen den Rippen (25) die Ausnehmungen (27) oder Hohlräume (26) vorhanden sind.

3. Gassack-Rückhaltesystem nach Anspruch 2, **dadurch gekennzeichnet, daß** Ausnehmungen (27) zwischen den Rippen (25) zur Innen- und/oder Außenseite des Behälters offen sind.

4. Gassack-Rückhaltesystem nach einem der Ansprüche 2 oder 3, **dadurch gekennzeichnet, daß** die Klappe (11) eine Grundplatte (21), die bei geschlossenem Zustand Außen- und Innenwand miteinander verbindet, sowie von der Grundplatte im wesentlichen rechtwinklig abstehende Rippen (25) aufweist.

5. Gassack-Rückhaltesystem nach einem der Ansprüche 2 bis 4, **dadurch gekennzeichnet, daß** bei montierten Rückhaltesystemen die Klappe (11) des geschlossenen Behälters annähernd horizontal verlaufend Innen- und Außenwand miteinander verbindet und die Rippen im wesentlichen in vertikaler Richtung verlaufen.

6. Gassack-Rückhaltesystem nach Anspruch 1, **dadurch gekennzeichnet, daß** ein Hohlraum durch Umspritzen eines eingelegten Hohlkörpers gebildet ist.

7. Gassack-Rückhaltesystem nach einem der vorhergehenden Ansprüche, **dadurch gekennzeichnet, daß** die Klappe (11) einstückig an der Innenwand (7) angeformt ist.

8. Gassack-Rückhaltesystem nach Anspruch 7, **dadurch gekennzeichnet, daß** die Klappe (11) eine Mehrkomponentenstruktur hat.

9. Gassack-Rückhaltesystem nach einem der vorhergehenden Ansprüche, **dadurch gekennzeichnet, daß** an der dem Fahrgastraum zugewandten Seite der Klappe (11) eine Abdeckung (29) angebracht ist.

10. Gassack-Rückhaltesystem nach einem der vorhergehenden Ansprüche, **dadurch gekennzeichnet, daß** wenigstens eine Rastverbindung (31) vorgesehen ist, die die Klappe (11) in der Stellung bei geschlossenem Behälter (3) hält.

11. Gassack-Rückhaltesystem nach einem der vorhergehenden Ansprüche, **dadurch gekennzeichnet, daß** die Innenwand (7) bis zur Anlage an die Außenwand (5) sich elastisch oder plastisch verformend nachgibt.

12. Gassack-Rückhaltesystem nach einem der vorhergehenden Ansprüche, **dadurch gekennzeichnet, daß** längs des Behälters mehrere nacheinander angeordnete Klappen (11) vorgesehen sind.

13. Gassack-Rückhaltesystem nach einem der vorhergehenden Ansprüche, **dadurch gekennzeichnet, daß** auf der Außenseite der Außenwand (5) Stege (37, 39) angeformt sind, über die der Behälter (3) am Fahrzeug anliegt.

14. Gassack-Rückhaltesystem nach einem der vorhergehenden Ansprüche, **dadurch gekennzeichnet, daß** in den Stegen (37, 39) wenigstens ein Hohlkörper (51) zur Stabilisierung der Außenwand (5) eingesetzt ist.

15. Gassack-Rückhaltesystem nach Anspruch 14, **dadurch gekennzeichnet, daß** der Hohlkörper (51) parallel zur Längserstreckung des Behälters angeordnet und über eine Clip-Verbindung an den Stegen (37, 39) lösbar befestigt ist.

## Claims

1. A head side gas bag restraint system for vehicle occupants, comprising a gas bag (13), a receiving container (3) for the gas bag (13), which container is to be secured to the vehicle, the receiving container (3) having an outer wall (5), an inner wall (7) facing the passenger compartment in the installed state, and at least one flap (11) which closes the container (3) in the non-activated state of the system and which swings open in the case of restraint, and with an ejection channel (19) for the gas bag (13) unfolding in the case of restraint being formed between the outer and inner walls (5, 7), **characterized in that** the flap (11) has structures arranged thereon, more particularly formed integrally therewith, which have recesses (27) or cavities (26) and are plastically deformed by the impact of the head.

2. The gas bag restraint system according to claim 1, **characterized in that** the flap (11) has a ribbed structure and that the recesses (27) or cavities (26) are provided between the ribs (25).

3. The gas bag restraint system according to claim 2, **characterized in that** recesses (27) between the ribs (25) are open toward the interior and/or exterior of the container.

4. The gas bag restraint system according to either one of claims 2 or 3, **characterized in that** the flap (11) includes a base plate (21) connecting the outer and inner walls with each other in the closed state, and ribs (25) projecting from the base plate substantially at a right angle.

5. The gas bag restraint system according to any of claims 2 to 4, **characterized in that** when the restraint systems are in the installed state, the flap (11) of the closed container extends approximately horizontally and connects the inner and outer walls with each other, and that the ribs extend substantially vertically.

6. The gas bag restraint system according to claim 1, **characterized in that** a cavity is formed by injection-molding around an inserted hollow body.

7. The gas bag restraint system according to any of the preceding claims, **characterized in that** the flap (11) is formed integrally with the inner wall (7).

8. The gas bag restraint system according to claim 7, **characterized in that** the flap (11) has a multi-component structure.

9. The gas bag restraint system according to any of the preceding claims, **characterized in that** a covering (29) is arranged on the face of the flap (11) facing the passenger compartment.

10. The gas bag restraint system according to any of the preceding claims, **characterized in that** at least one snap-in connection (31) is provided, which holds the flap (11) in position when the container (3) is closed.

11. The gas bag restraint system according to any of the preceding claims, **characterized in that** the inner wall (7) yields in a manner deforming elastically or plastically up to abutment against the outer wall (5).

12. The gas bag restraint system according to any of the preceding claims, **characterized in that** a plurality of flaps (11) is provided along the container, arranged one after the other.

13. The gas bag restraint system according to any of the preceding claims, **characterized in that** webs (37, 39) are integrally formed on the outer face of the outer wall (5), the container (3) lying against the vehicle via the webs (37, 39).

14. The gas bag restraint system according to any of the preceding claims, **characterized in that** at least one hollow body (51) is inserted in the webs (37, 39) for stabilizing the outer wall (5).

15. The gas bag restraint system according to claim 14, **characterized in that** the hollow body (51) is arranged parallel to the longitudinal extent of the container and is releasably secured to the webs (37, 39) via a clip-on connection.

## Revendications

1. Système de retenue de la tête par coussin à gaz latéral pour passagers d'un véhicule, comportant un coussin à gaz (13), un récipient (3) pour le coussin à gaz (13), qui est à fixer au véhicule, le récipient (3) ayant une paroi extérieure (5), une paroi intérieure (7) orientée vers l'intérieur du véhicule à l'état monté, et au moins un volet (11) qui ferme le récipient (3) à l'état non activé du système et qui s'ouvre en basculant en cas de retenue, et entre les parois extérieure et intérieure (5, 7) étant formé un canal d'éjection (19) pour le coussin à gaz (13) se déployant en cas de retenue, **caractérisé en ce que** des structures sont appliquées, en particulier moulées sur le volet (11), qui présentent des évidements (27) ou des cavités (26) et qui sont déformées plastiquement par l'impact de la tête.

2. Système de retenue par coussin à gaz selon la revendication 1, **caractérisé en ce que** le volet (11) a une structure nervurée et **en ce que** les évidements (27) et cavités (26) se trouvent entre les nervures (25).

3. Système de retenue par coussin à gaz selon la revendication 2, **caractérisé en ce que** des évidements (27) entre les nervures (25) sont ouverts vers la face intérieure et/ou la face extérieure du récipient.

4. Système de retenue par coussin à gaz selon l'une quelconque des revendications 2 ou 3, **caractérisé en ce que** le volet (11) comporte une plaque de base (21) qui, à l'état fermé, relie la paroi extérieure à la paroi intérieure, et des nervures (25) faisant saillie depuis la plaque de base, sensiblement en angle droit.

5. Système de retenue par coussin à gaz selon l'une quelconque des revendications 2 à 4, **caractérisé en ce que** lorsque les systèmes de retenue sont montés, le volet (11) du récipient fermé, s'étendant approximativement à l'horizontale, relie la paroi intérieure à la paroi extérieure, et **en ce que** les nervures s'étendent sensiblement en direction verticale.

6. Système de retenue par coussin à gaz selon la revendication 1, **caractérisé en ce qu'**une cavité est formée par moulage par injection d'un corps creux inséré.

7. Système de retenue par coussin à gaz selon l'une quelconque des revendications précédentes, **caractérisé en ce que** le volet (11) est formé d'un seul tenant sur la paroi intérieure (7).

8. Système de retenue par coussin à gaz selon la revendication 7, **caractérisé en ce que** le volet (11) a une structure à plusieurs constituants.

9. Système de retenue par coussin à gaz selon l'une quelconque des revendications précédentes, **caractérisé en ce qu'**un couvercle (29) est monté sur le côté du volet (11) tourné vers l'intérieur du véhicule.

10. Système de retenue par coussin à gaz selon l'une quelconque des revendications précédentes, **caractérisé en ce qu'**il est prévu au moins une liaison par enclenchement (31) qui maintient le volet (11) en position lorsque le récipient (3) est fermé.

11. Système de retenue par coussin à gaz selon l'une quelconque des revendications précédentes, **caractérisé en ce que** la paroi intérieure (7) cède en se déformant élastiquement ou plastiquement jusqu'à venir en appui contre la paroi extérieure (5).

12. Système de retenue par coussin à gaz selon l'une quelconque des revendications précédentes, **caractérisé en ce qu'**il est prévu plusieurs volets (11) agencés les uns derrière les autres le long du récipient.

13. Système de retenue par coussin à gaz selon l'une quelconque des revendications précédentes, **caractérisé en ce que** sur la face extérieure de la paroi extérieure (5) sont formées des âmes (37, 39) par l'intermédiaire desquelles le récipient (3) est en appui sur le véhicule.

14. Système de retenue par coussin à gaz selon l'une quelconque des revendications précédentes, **caractérisé en ce que** dans les âmes (37, 39) est inséré au moins un corps creux (51) pour stabiliser la paroi extérieure (5).

15. Système de retenue par coussin à gaz selon la revendication 14, **caractérisé en ce que** le corps creux (51) est agencé parallèlement à l'extension longitudinale du récipient et est fixé de manière détachable aux âmes (37, 39) par l'intermédiaire d'une liaison par clip.
